# EUROPEAN PATENT APPLICATION

(11) **EP 3 379 323 A1**
(43) Date of publication of application: **26.09.2018**
(21) Application number: 17162235.0
(22) Date of filing: 22.03.2017
(51) Int. Cl.: G02C 5/00, G02C 5/22

(54) **SPECTACLE HINGE, SPECTACLE RIM OR TEMPLE, SPECTACLE FRAME, PAIR OF SPECTACLES, METHOD FOR MANUFACTURING A SPECTACLE HINGE**

(71) Applicant: Haffmans & Neumeister GmbH, 10785 Berlin (DE)
(72) Inventor: BECKER, Stefan, 10717 Berlin (DE); HAFFMANS, Philipp, 10115 Berlin (DE)
(74) Representative: Seliger, Knut

(57) **Abstract**

The invention relates to a spectacle hinge for the articulated connection of a temple to a spectacle rim, a spectacle rim or a temple, a spectacle frame, a pair of spectacles and a method for manufacturing a spectacle hinge.

A spectacle hinge (10) for the articulated connection of a temple (12) to a spectacle rim (14) is provided. It comprises an inner hinge part (20) and an outer hinge part (22). Said inner hinge part (20) is arranged or arrangeable radially inside said outer hinge part (22) in a rotatable manner relative to said outer hinge part (22) around a rotation axis. Said inner hinge part (20) comprises at least on its radial outer side (30) at least one form element (40) and said outer hinge part (22) comprises at least on its radial inner side (31) at least one form element (40). Said form elements (40) are shaped essentially complementary and configured to engage with each other when they overlap radially, providing a locking of said hinge parts to one another in a defined angular position.

## Description

The invention relates to a spectacle hinge for the articulated connection of a temple to a spectacle rim, a spectacle rim or a temple, a spectacle frame, a pair of spectacles and a method for manufacturing a spectacle hinge.

A wide variety of hinges with different characteristics and drawbacks is known for connecting temples of a spectacle to the spectacle frame. Many known hinges comprise a multitude of components: Typically, at least two hinge parts and a bolt are needed. In some cases, additional fixing means are necessary to fix the hinge parts to the bolt. This renders the known hinges complicated and limits the creative freedom in designing spectacles.

A typically used hinge is a screwed hinge. The torque required for a relative movement of the two hinge parts can be manually adjusted by a screw. A too tight or too loose position would render the hinge inoperative: Either the torque required is too high or the screw loosens.

US 6 260 965 describes an eyeglass frame with a frame front, a pair of temple bars and hinges for pivotally connecting each temple to the frame front. The hinges comprise a pivot and a barrel with an axial slit, thus forming a hook-like structure. The pivot comprises a pintle core and a pivot member and the barrel is realized as a resilient spring for urging the barrel in friction engagement with at least part of the pivot. Thus, a radial tension is exerted from the barrel onto the pivot for fixing the hinge parts to each other.

US 7 484 844 describes a hinge for spectacles with two spectacle frame parts joined in a pivoted manner by a bolt. The end of one spectacle frame part has a bend for pivotally taking up the bolt. The end of the second spectacle frame part is firmly connected to the bolt. A flexible tongue with a second bend is provided, said second bend enclosing the first bend for realizing the rotational movement.

The known solutions are complicated, prone to failure and expensive as they need a multitude of components. Besides, they are not convenient to use as they e.g. are not capable of realizing a smooth folding behavior and/or do not provide locking positions.

The problem to be solved is to provide a spectacle hinge, a spectacle rim or a temple, a spectacle frame and a pair of spectacles which are easy and cost-effective to manufacture and convenient to use. The problem to be solved is further to provide a method for manufacturing a spectacle hinge which is easy and cost-effective.

The problem is solved by the spectacle hinge for the articulated connection of a temple to a spectacle rim as claimed in claim 1, by the spectacle rim or temple as claimed in claim 12, the spectacle frame as claimed in claim 13, the pair of spectacles as claimed in claim 14, and the method for manufacturing a spectacle hinge as claimed in claim 15. Embodiments of the spectacle hinge are described in the dependent claims 2-11.

A first aspect of the invention is a spectacle hinge for the articulated connection of a temple to a spectacle rim. It comprises an inner hinge part and an outer hinge part. Said inner hinge part is arranged or arrangeable radially inside said outer hinge part in a rotatable manner relative to said outer hinge part around a rotation axis. Said inner hinge part comprises at least on its radial outer side at least one form element and said outer hinge part comprises at least on its radial inner side at least one form element. Said form elements are shaped essentially complementary and configured to engage with each other when they overlap radially, providing a locking of said hinge parts to one another in a defined angular position.

The arrangement of the inner hinge part inside the outer hinge part in particular means that at least parts of said inner hinge part are surrounded by at least parts of said outer hinge part. Thus, in an assembled state of the hinge, said hinge parts overlap in at least a section.

The assembled state of the spectacle hinge means that the inner hinge part is arranged radially inside the outer hinge part and, in particular, arranged in such an angular position that said hinge parts are fixed to each other at least along the axial direction. The axial direction refers to the direction of the rotation axis.

Typically, said hinge parts have essentially corresponding shapes or cross sections, as seen along the axial direction. In particular, both hinge parts have round or regularly polygonal shapes, e.g. rhombic or square shapes, with at least one form element. Also, a circular base shape can be realized comprising one form element which is realized as an edge. The shapes may comprise a gap, resulting in a hook-like shape of the hinge parts.

Each form element may be an edge formed by bending the material. Said edge may be aligned parallel to the rotation axis. Thus, said form elements may also extend in the respectively opposite-lying position. The form element of the inner hinge part may also extend to the inner side of the inner hinge part and/or the form element of the outer hinge part may extend in the outer side of the outer hinge part.

In other words, an engagement or locking mechanism is provided for locking both hinge parts in a defined position. The form elements may e.g. be configured to realize a locking of said hinge parts to one another in an angle of 90° or 180°.

The defined angular position relates to a position of the outer hinge part with respect to the inner hinge part.

In particular, said form elements allow for a "clicking" behavior, realizing a smooth and easy rotational movement of the hinge parts after overcoming a snap-in position.

The radial direction relates to the common rotation axis of both hinge parts around which one hinge part is rotatable with respect to the respective other hinge part in order to realize a hinge.

Typically, each hinge part is connected or connectable to a temple or a spectacle front. Thus, the form elements allow for a locking of the two hinge parts to one another in at least one angular position, in particular in an opened and/or folded state of a temple connected to one of the hinge parts with respect to the spectacle rim.

The spectacle hinge according to the invention requires low maintenance. It is simple, robust, less susceptible to problems and has a low weight. Furthermore, it offers a great creative freedom for realizing an esthetic concept due to its simplicity.

In one embodiment, a compressive stress acts between both hinge parts along a radial direction in at least one rotational position of the inner hinge part with respect to the outer hinge part. In other words, the inner and/or outer hinge part is configured to exert a radial compressive stress onto the respective other hinge part in at least one rotational position hinge parts with respect to each other.

The compressive stress particularly acts in more than one radial direction and, more particularly, in all radial directions in which said hinge parts overlap. It acts in an assembled state of the hinge.

The compressive stress acts at least when the form elements do not overlap radially. It is in particular caused by bending stress and/or spring back behavior of said inner and/or said outer hinge part and it may serve for urging said hinge parts into friction engagement and improving the stability of the hinge.

In another embodiment, said inner hinge part is hollow.

In other words, the rotation axis is not an object serving as a mechanical axis. This enables to construct a spectacle frame comprising only three parts: two temples and a spectacle rim, which facilitates construction and simplifies the design. No connecting elements are necessary. Additionally, the manufacturing of such a spectacle frame is simple as it only comprises forming processes and no joining, e.g. by welding, soldering or gluing, is necessary.

In a further embodiment, both hinge parts are manufactured from bent metal.

Said metal is typically used in the form of metal sheets or metal strips. It may be cut to size or formed e.g. by laser cutting, cutting, punching and/or etching processes. This embodiment allows for a stable and cost-efficient production by only bending the metal parts in order to form hinges together with the respective spectacle rim or temple parts. This furthermore serves an esthetic concept, as a 3-dimensional hinge is formed from a flat material.

Both hinge parts may have a thickness between 0.3 mm and 0.8 mm, in particular between 0.4 mm and 0.6 mm.

They may be manufactured from a material with the said thickness. In particular, bent metal strips with approx. 0.5 mm strength are used. This represents an optimum of stability, the stiffness of spectacle parts and the hinge's stiffness.

Both hinge parts may be manufactured from steel with a modus of elasticity between 180.000 N/mm² and 220.000 N/mm², in particular between 185.000 and 200.000 N/mm². Said steel is in particular a stainless steel.

The material may be an austenitic stainless steel. Said material may comprise 10%-20% Chromium, 5%-10% Nickel, 0.5%-5% Molybdenum, up to 5% Copper, up to 2 % Titanium, up to 1% Aluminum, up to 0.2% or 0.1% or 0.05% Carbon, up to 2% Silicon, up to 2% Manganese, below 0.04% Phosphorus and/or below 0.005% Sulphur.

The material's tensile strength may be between 1700 N/mm²and 2050 N/mm²in a cold rolled state and may be increased to up to 2300 N/mm²by heat treatment. In another embodiment, said tensile strength may be between 950 N/mm²and 1850 N/mm²in a cold rolled state and may be increased up to 2600 N/mm²by heat treatment.

Said material has the advantage that it is a deformable yet flexible material. In particular, the spectacle frame is also manufactured from said steel. This renders the spectacles convenient to use and facilitates insertion of the lenses.

In another embodiment, the temples are manufactured from said steel. Thus, they are easily and effectively adjustable to the user, e.g. fitting it to the ear height and/or shape of the nose. Also, nose pads may be made of the same material so they are easily adjustable. In one embodiment, said steel is used for all parts of the spectacles except for the lenses and, if applicable, except for plastic parts e.g. on nose pads and/or temples.

Thus, the spectacles require especially low maintenance.

In one embodiment, the outer hinge part and/or the inner hinge part comprises at least one end stop element for impeding a rotation beyond a defined angular position of said hinge part with respect to the respective other hinge part, in particular beyond approx. 180°.

For example, stop elements can be arranged on two sides of the respective hinge part, e.g. of the outer hinge part. They can thus gird the other hinge part from two sides, e.g. above and below a central section, as described below. The hinge may have two pairs of stop elements working the same or in different positions.

In yet another embodiment, the inner hinge part and/or the outer hinge part comprises at least one additional form element which is shaped essentially complementary to said form element or form elements and configured to engage with the respective form element when they overlap radially. It provides a locking of said hinge parts to one another in a defined angular position, in particular approx. 180°.

In particular, as described above, said form element is arranged on the side of a hinge part facing or faceable, i.e. alignable, towards the respective other hinge part. It may be only in one of said hinge parts, as one form element may engage several form elements of the other of said hinge parts in different angular positions. Additionally, the other hinge part may also have at least one additional form element.

This enables to realize defined temple positions in an opened and/or folded state of the temple.

In one embodiment, the radial inner side of the outer hinge part and the radial outer side of the inner hinge part of the spectacle hinge have a square cross section in a plane which is perpendicular to said rotation axis, wherein said form elements are realized by the edges of said square, wherein said edges are in particular rounded. Both hinge parts may entirely be formed in the said cross sections.

In other words, each hinge part has four form elements of which respectively two form elements are arranged radially offset by 180° in pairs. The two pairs of form elements which are arranged offset as described form-locking positions which are offset by 90°. Individual form elements may be realized as openings or recesses of a wall element formed by the respective hinge part.

The square cross section is realized at least on the side of the hinge part facing the respective other hinge part such that the edges of the square can fit the respective corresponding edges.

In other words, the square shape is seen along the axial direction. In particular, all edges are rounded and constitute respective form elements as described. The connection between the hinge part and the respective spectacle part may be realized in a corner position.

In this embodiment, at least a 90° and a 180° locking of said hinge parts to one another may be realizable, wherein each edge of the inner hinge part engages with a respective edge of the outer hinge part. The edges are thus configured to engage with each other when they overlap radially, providing a locking of said hinge parts to one another in defined angular positions.

The bend radius of the edges is typically between 0.5 mm and 3 mm, in particular between 0.7 mm and 1.3 mm.

This embodiment describes a simple and functional hinge design which furthermore represents an esthetic form.

In another embodiment, said inner and/or said outer hinge part is connected to a web, wherein at least one web comprises an opening in order to enable the respective other hinge part to be inserted into said opening.

The web is in particular a bar-shaped or rod-shaped elongated element, e.g. a metal strip, which is firmly connected to the respective hinge part. By the contact of the hinge parts at the boundary edges of the opening, a stabilization of the hinge around the rotation axis is realized.

The web is in particular formed together with the hinge part from one piece. It may be used to connect the respective hinge part to an external structure such as a temple or a spectacle rim or it may be a part of the external structure.

In particular, at least one sector of one hinge part is realized as a tongue which is configured and arranged in such a way that said tongue is inserted into said opening of said other hinge part and runs through said opening when said inner hinge part is arranged inside said outer hinge part.

The opening may e.g. be a rectangular hole. It may alternatively be a non-closed opening such as a slot. The tongue is typically a narrower section of the bent strip.

In one embodiment, said inner and/or said outer hinge part has a gap in angular direction. Said gap is arranged between a web which is connected to the respective hinge part and an end section of a wall which limits the hollow space located on the radial inner side of the respective hinge part. In particular, said gap allows for an elastic radial movement of the respective wall.

The gap may be parallel to the rotation axis. It may extend between 0° and 90° in angular direction. Thus, the respective hinge part may have a hook-like shape.

In one embodiment, at least one of said hinge parts extends over an angle of at least 270° around said rotation axis. In particular, both hinge parts extend over an angle of at least 270°, respectively, around the rotation axis. In an angle near 360°, webs or spectacle parts, as described, which are attached to the hinge parts, are essentially parallel and face in the same direction. In this position, the hinge can in particular be disassembled: The hinge parts can be separated by a relative movement of the hinge parts along the axial direction.

Said angle forms e.g. a circle segment or polygonal segment in a plane which is perpendicular to the rotation axis. In particular, an angle of at least 300° is realized, so a 270° position can be safely achieved and used without disassembly of the hinge. In other words, at least one hinge part may be a closed or semi-closed circle or polygon.

In one embodiment, the end section is deflected to the radial inner direction to release or open an opening which is arranged in at least one of the webs in order to let the respective other hinge part be inserted into said opening.

In another embodiment, the inner hinge part and/ or outer hinge part is connected to a web, wherein said web comprises extensions overlapping said hinge part and extending perpendicular to the rotation axis, such that in an assembled state of the spectacle hinge the extensions contact the respective other hinge part along the direction of the rotation axis on two sides and, thus, stabilize the hinge in axial direction.

Said extensions in particular overlap the outer hinge part and protrude in the direction of the web and/or direct towards the respective other hinge part in an assembled state. In other words, said contact zones between the extensions and the respective other hinge part can be described as sections of two planes which run in parallel and are located at a distance and perpendicular to the rotation axis, respectively.

This furthermore prevents a tilting movement in the hinge.

In other words, the extensions serve as retaining elements which are configured to retain said hinge part from two sides in order to stabilize it against shear.

In particular, one hinge part comprises a tongue, as described. The retaining elements may thus be realized in combination with a tongue running through an opening. They may work in all rotational positions. They may pose lateral stops for the respective hinge parts and are typically formed by cutting, e.g. laser-cutting, or punching and bending pieces of the workpiece, e.g. metal workpiece, which the respective hinge part is manufactured from. Thereby, during manufacturing, the retaining elements may remain in place while the part lying in between is bent in order to form the respective hinge part.

This embodiment enables for a stabilization of the hinge and facilitates the use.

In another embodiment, the spectacle hinge comprises at least one stop element which is configured to limit a rotational movement of one hinge part with respect to the other hinge part; in particular, at least one hinge part comprises at least one, in particular two steps formed in the opposite-lying narrow sides of the respective hinge part, of which each provides a face which is applicable as a stop element.

Rotational movement is a movement around the rotation axis. In particular, said stop element is arranged parallel to the rotation axis. It may be arranged on the inner and/or the outer hinge part.

The steps may be arranged on two opposite sides of the respective hinge part, e.g. of the respective tongue. They are in particular configured to contact the web of the respective other hinge part in one angular position such that said angular position is stabilized.

If both hinge parts comprise steps, said steps are in particular arranged and configured such that the stabilization can be realized in the same angular position of the hinge parts.

Said extensions may be arranged on both sides of the tongue, forming the steps. They may be suitable to be used as stop elements, as described.

A second aspect of the invention is a spectacle rim or a temple which comprises an inner and/or an outer hinge part of the spectacle hinge according to the invention.

In other words, said rim or temple may comprise an inner hinge part which is configured to form a spectacle hinge according to the invention together with a corresponding outer hinge part. It may alternatively comprise an outer hinge part which is configured to form a spectacle hinge according to the invention together with a corresponding inner hinge part. Alternatively, it may comprise the whole spectacle hinge according to the invention.

A third aspect of the invention is a spectacle frame which comprises two temples and a spectacle rim. Each of said temples is in articulated connection with said spectacle rim by means of a spectacle hinge according to the invention.

The spectacle rim may also be referred to as spectacle front. It is the part holding the lenses. The described spectacle frame is simple and easy to manufacture as it only comprises three parts.

In one embodiment of the spectacle frame, each of said temples, respectively, is manufactured from one bent metal strip, wherein one hinge part is formed from the respective metal strip. In particular, each temple is formed together with one hinge part from one metal strip.

In another embodiment spectacle frame, it is manufactured from a bent metal strip with two of the other hinge parts being formed from said metal strip.

In other words, each temple may be manufactured from a bent metal strip together with an inner hinge part or an outer hinge part. The respective other hinge part may be formed together with the spectacle rim.

A fourth aspect of the invention is a pair of spectacles comprising a spectacle frame according to the invention and at least one lens, in particular two lenses, which are supported by the spectacle rim. In case of one lens it may extend over the whole sight field and covers both eyes.

A fifth aspect of the invention is a method for manufacturing a spectacle hinge. It comprises the steps of providing an inner hinge part with at least one form element at least on its radial outer side and providing an outer hinge part with at least one form element at least on its radial inner side. Said inner hinge part is realized in such a way that it is arrangeable radially inside said outer hinge part in a rotatable manner relative to said outer hinge part around a rotation axis. Said form elements are shaped essentially complementary and configured to engage with each other when they overlap radially, providing a locking of said hinge parts to one another in a defined angular position, in particular approx. 90°. The method further comprises the step of inserting said inner hinge part into said outer hinge part to form said hinge.

Providing a said hinge part may be realized by bending a metal strip in order to form said hinge part. Alternatively, hinge parts may be manufactured by providing, forming and/or processing a suitable alternative material such as carbon-fiber-reinforced plastic.

Inserting said inner hinge part into said outer hinge part in particular comprises a relative translational movement of said hinge parts along the axial direction in order to arrange the inner hinge part radially inside the outer hinge part. It may further comprise realizing a rotational relative movement between the hinge parts in order to establish a connection.

In particular, said spectacle hinge is a spectacle hinge according to the invention. Thus, the hinges, the spectacle frame, and the spectacle rim are essentially manufactured from the same material.

The invention is further illustrated and characterized by the following figures that show examples from which further embodiments and advantages can be drawn. These figures are meant to illustrate the invention but not to limit its scope.
Figure 1 shows a perspective view of a disassembled spectacle hinge according to the invention,
Figure 2 shows a perspective view of the spectacle hinge of Fig. 1 in an assembled state,
Figure 3 shows a perspective view of the spectacle hinge of Fig. 2 with a different angular position of the hinge parts,
Figure 4 shows a perspective view of the spectacle hinge of Fig. 2 with yet another different angular position of the hinge parts,
Figure 5 shows a perspective view of a disassembled spectacle frame according to the invention, and
Figure 6 shows a perspective view of the spectacle frame of Fig. 6 in an assembled state.

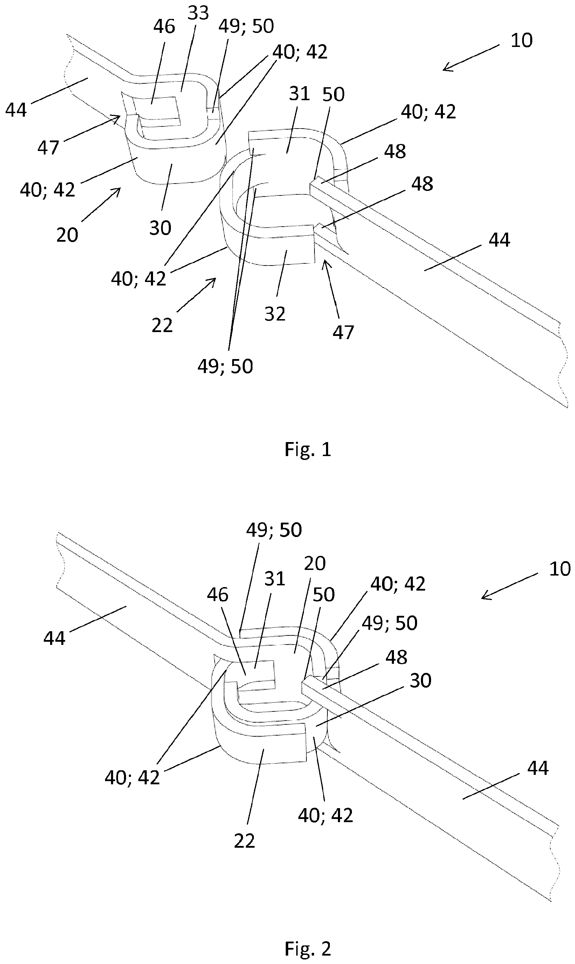

The general construction of the spectacle hinge 10 is shown in Figure 1. It comprises an inner hinge part 20 and an outer hinge part 22 which, in an assembled state, are rotatable around a rotation axis (not shown) which runs in a vertical direction in the figure. Each hinge part has a square cross section in a plane which is perpendicular to the rotation axis. The edges 42 of the squares are rounded and serve as form elements 40, which are shaped complementary on the respective hinge parts and which are configured to engage with each other when they overlap radially. Thus, both hinge parts 20, 22 can be locked to one another in angular positions which are offset by 90°.

Both hinge parts 20, 22 are manufactured from bent metal strips with a thickness of 0.5 mm. The inner hinge part 20 comprises a radial inner side 33 and a radial outer side 30 and the outer hinge part 22 comprises a radial inner side 31 and a radial outer side 32. The form elements 40 are formed on the respective inner sides 31, 33 and outer sides 30, 32. The radial inner side 33 of the inner hinge part 20 and, thus, the region of the axis of the hinge 10, is hollow.

Each hinge part 20, 22 has been manufactured together with a web 44 and is thus connected to said web 44. The web 44 of the inner hinge part 20 comprises an opening 46 which is configured to allow the outer hinge part 22 to be inserted into said opening 46. It is realized as a rectangular hole.

The web 44 of the outer hinge part 22 comprises two extensions 48 which overlap said hinge part 22 perpendicular to the rotation axis. The extensions 48 serve as guides for the inner hinge part 20, as they contact it from the upper and the lower sides and, thus, enable a guided rotational movement.

Both hinge parts 20, 22 have a gap 47 in angular direction which is parallel to the rotation axis. It is arranged between the web 44 and an end section of a wall. Said wall limits the hollow space located on the radial inner side 33 of the inner hinge part 20 and on the radial inner side 31 of the outer hinge part 22, respectively. The gaps 47 allow for an elastic radial movement of the respective wall and enable the walls to exert a compressive stress in radial direction.

Both hinge parts 20, 22 comprise several stop elements 50 for limiting the relative rotational movement between the hinge parts. At the outer hinge part 22, the end faces of the extensions 48 serve as stop elements 50 and there are additional steps 49 with stop elements near the most distant point of the hinge part 22 from the web 44. The inner hinge part 20 comprises steps 49 which are realized analogous to the steps 49 of the outer hinge part 22.

In Figure 2, the inner hinge part 20 is arranged radially inside said outer hinge part 22 in a rotatable manner. Its radial outer side 30 contacts the radial inner side 31 of the outer hinge part 22 and the form elements 40 of both hinge parts 20, 22 rest against one another in a locked state in a 180° position.

The extensions 48 of the outer hinge part 22 contact a narrow portion of the inner hinge part 20, also referred to as tongue, on the upper and lower sides. Thus, they stabilize the hinge 10 in the axial direction. A narrow portion, or tongue, of the outer hinge part 22 runs through the opening 46 in the web 44 of the inner hinge part 20 and enables a rotational movement while stabilizing the hinge.

The stop elements 50, formed by the steps 49 or extensions 48, as described, limit the relative rotational movement of the hinge parts 20, 22 to the shown angular position of 180°. In the shown position, the stop elements 50 of the outer hinge part which are formed by the steps 49 contact the web 44 of the inner hinge part 20. The stop elements 50 of the outer hinge part 22 which are formed by the extensions 48 contact and block the stop elements 50 formed by the steps 49 of the inner hinge part 20.

In the assembled state, a compressive stress acts between the hinge parts 20, 22 along a radial direction in angular positions between the locking positions and, to a lesser extent, also in the locking positions, e.g. in the 180° position as shown.

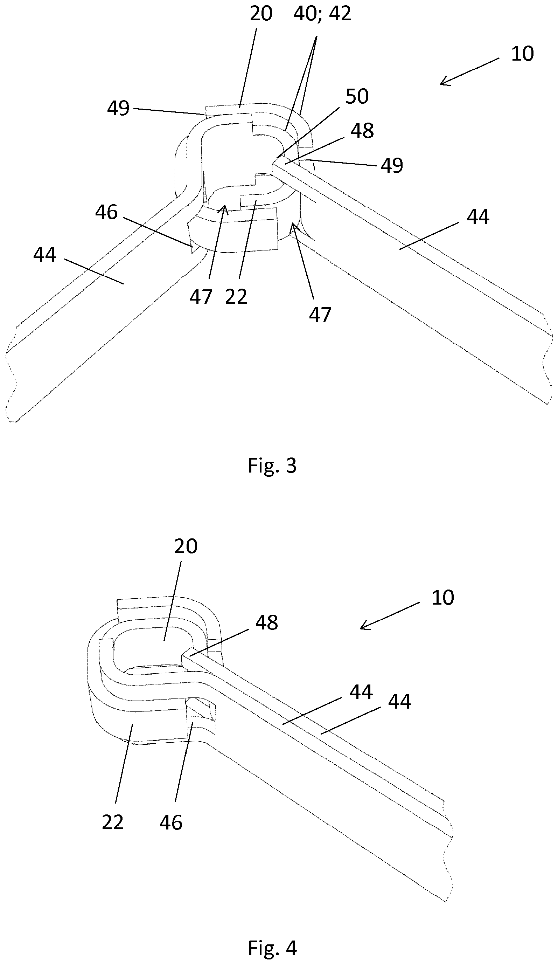

In Figure 3, the 90° position of the webs 44 or of the hinge 10, respectively, is shown. The form elements 40 of both hinge parts 20, 22 rest against one another locking the relative position. The tongue of the outer hinge part 22 has been inserted into the opening 46 of the inner hinge part 20 and runs through said opening 46. The extensions 48 stabilize the hinge as described. The stop elements 48 do not contact the corresponding areas. The gaps 47 of the hinge parts do not overlap, thus the hinge parts extend over 360° around the rotation axis.

Figure 4 shows the 0° position of the hinge 10 where the webs 44 are aligned in parallel. It becomes evident that the tongue of the outer hinge part 22 does not run through the opening 47 and that the extensions 48 of the inner hinge part 20 do not contact the outer hinge part 22 in this angular position. Thus, the hinge can be disassembled by relatively moving the hinge parts 20, 22 along the axial direction.

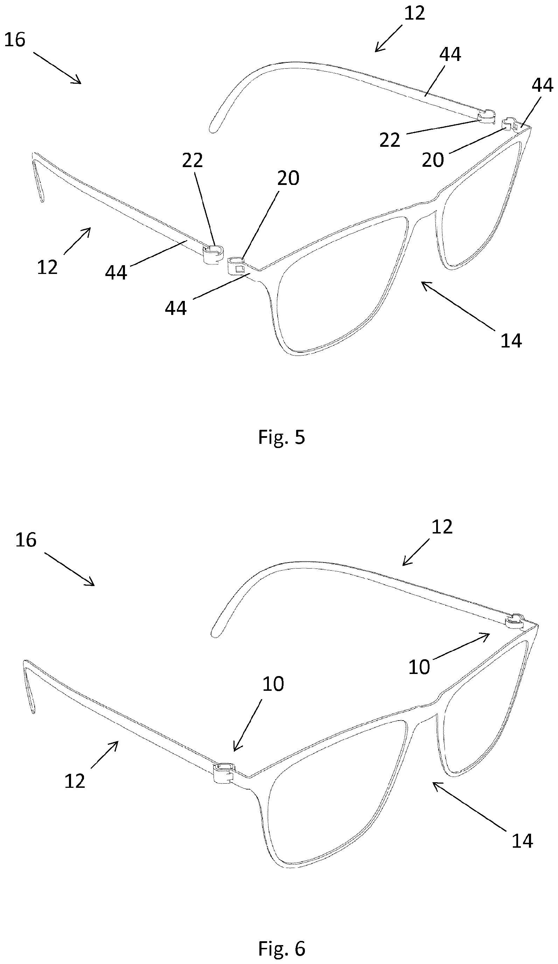

The disassembled spectacle frame 16 is depicted in Figure 5. It comprises two temples 12 and a spectacle rim 14, also referred to as spectacle front. Each temple 12 has an outer hinge part 22 and the spectacle rim 14 has two inner hinge parts. The temples 12 and the spectacle rim 14 are manufactured from bent metal together with the respective hinge parts 20, 22 such that the webs 44 of the hinge parts 20, 22 are also parts of the temples 12 or the spectacle rim 14, respectively.

Figure 6 shows the spectacle frame 16 in an assembled state. The hinges 10 are assembled and articulately connect the temples 12 to the spectacle rim 14.

**List of reference signs**

| | |
|---|---|
| spectacle hinge | 10 |
| temple | 12 |
| spectacle rim | 14 |
| spectacle frame | 16 |
| inner hinge part | 20 |
| outer hinge part | 22 |
| radial outer side of the inner hinge part | 30 |
| radial inner side of the outer hinge part | 31 |
| radial outer side of the outer hinge part | 32 |
| radial inner side of the inner hinge part | 33 |
| form element | 40 |
| edge | 42 |
| web | 44 |
| opening | 46 |
| gap | 47 |
| extension | 48 |
| step | 49 |
| stop element | 50 |

## Claims

1. A spectacle hinge (10) for the articulated connection of a temple (12) to a spectacle rim (14) comprising an inner hinge part (20) and an outer hinge part (22), said inner hinge part (20) being arranged or arrangeable radially inside said outer hinge part (22) in a rotatable manner relative to said outer hinge part (22) around a rotation axis, **characterized in that** said inner hinge part (20) comprises at least on its radial outer side (30) at least one form element (40) and said outer hinge part (22) comprises at least on its radial inner side (31) at least one form element (40), wherein said form elements (40) are shaped essentially complementary and wherein said form elements (40) are configured to engage with each other when they overlap radially, providing a locking of said hinge parts (20, 22) to one another in a defined angular position.

2. The spectacle hinge (10) according to claim 1, **characterized in that** a compressive stress acts between both hinge parts (20, 22) along a radial direction in at least one rotational position of the inner hinge part (20) with respect to the outer hinge part (22).

3. The spectacle hinge (10) according to one of the preceding claims, **characterized in that** said inner hinge part (20) is hollow.

4. The spectacle hinge (10) according to one of the preceding claims, **characterized in that** both hinge parts (20, 22) are manufactured from bent metal.

5. The spectacle hinge (10) according to one of the preceding claims, **characterized in that** both hinge parts (20, 22) have a thickness between 0.3 mm and 0.8 mm, in particular between 0.4 mm and 0.6 mm.

6. The spectacle hinge (10) according to one of the preceding claims, **characterized in that** both hinge parts (20, 22) are manufactured from steel with a modus of elasticity between 180.000 N/mm²and 220.000 N/mm², in particular between 185.000 and 200.000 N/mm², wherein said steel is in particular a stainless steel.

7. The spectacle hinge (10) according to one of the preceding claims, **characterized in that** the radial inner side (31) of the outer hinge part (22) and the radial outer side (30) of the inner hinge part (20) have a square cross section in a plane which is perpendicular to said rotation axis, wherein said form elements (40) are realized by the edges (42) of said square, wherein said edges are in particular rounded.

8. The spectacle hinge (10) according to one of the preceding claims, **characterized in that** said inner and/or said outer hinge part (20, 22) is connected to a web (44), wherein at least one web (44) comprises an opening (46) in order to enable the respective other hinge part (22, 20) to be inserted into said opening (46).

9. The spectacle hinge (10) according to one of the preceding claims, **characterized in that** said inner and/or said outer hinge part (20, 22) has a gap (47) in angular direction, said gap (47) being arranged between a web (44) which is connected to the respective hinge part (20, 22) and an end section of a wall which limits the hollow space located on the radial inner side of the respective hinge part (20, 22).

10. The spectacle hinge (10) according to one of the preceding claims, **characterized in that** the inner hinge part (20) and/ or the outer hinge part (22) is connected to a web (44), wherein said web (44) comprises extensions (48) overlapping said hinge part (20, 22) and extending perpendicular to the rotation axis, such that in an assembled state of the spectacle hinge (10) the extensions (48) contact the respective other hinge part (22, 20) along the direction of the rotation axis on two sides and, thus, stabilize the hinge in axial direction.

11. The spectacle hinge (10) according to one of the preceding claims, **characterized in that** said spectacle hinge (10) comprises at least one stop element (50) which is configured to limit a rotational movement of one hinge part (20, 22) with respect to the other hinge part (22, 20); in particular, at least one hinge part (20, 22) comprises at least one, in particular two steps (49) formed in the opposite-lying narrow sides of the respective hinge part, of which each provides a face which is applicable as a stop element (50).

12. A spectacle rim (14) or a temple (12), **characterized in that** it comprises an inner and/or an outer hinge part (22) of the spectacle hinge (10) as claimed in one of the claims 1-11.

13. A spectacle frame (16), comprising two temples (12) and a spectacle rim (14), **characterized in that** each of said temples (12) is in articulated connection with said spectacle rim (14) by means of a spectacle hinge (10) as claimed in at least one of the claims 1-11.

14. A pair of spectacles, **characterized in that** it comprises a spectacle frame (14) as claimed in claim 13 and at least one lens, in particular two lenses, which are supported by the spectacle rim (14).

15. A method for manufacturing a spectacle hinge (10), comprising the steps of
- providing an inner hinge part (20) with at least one form element (40) at least on its radial outer side (30),
- providing an outer hinge part (22) with at least one form element (40) at least on its radial inner side (31), wherein said inner hinge part (20) is realized in such a way that it is arrangeable radially inside said outer hinge part (22) in a rotatable manner relative to said outer hinge part (22) around a rotation axis, and wherein said form elements (40) are shaped essentially complementary and configured to engage with each other when they overlap radially, providing a locking of said hinge parts (20, 22) to one another in a defined angular position, and
- inserting said inner hinge part (20) into said outer hinge part (22) to form said hinge (10).
